# EUROPEAN PATENT APPLICATION

(11) **EP 4 808 199 A1**
(43) Date of publication of application: **16.09.2026**
(21) Application number: 24904083.3
(22) Date of filing: 27.11.2024
(51) Int. Cl.: H04W 28/02, H04L 43/0864, H04L 47/193, H04L 47/2483, H04L 47/263

(54) **METHOD AND APPARATUS FOR CONTROLLING NETWORK CONGESTION IN WIRELESS COMMUNICATION SYSTEM**

(30) Priority: 11.12.2023 KR 20230178731
(71) Applicant: Samsung Electronics Co., Ltd., Suwon-si, Gyeonggi-do 16677 (KR)
(72) Inventor: KIM, Sunhyun, Suwon-si Gyeonggi-do 16677 (KR); HAN, Yoonseon, Suwon-si, Gyeonggi-do 16677 (KR); KIM, Sunghwan, Suwon-si, Gyeonggi-do 16677 (KR); MOON, Younggyoun, Suwon-si, Gyeonggi-do 16677 (KR)
(74) Representative: Nederlandsch Octrooibureau
(86) International application number: PCT/KR2024/018984
(87) International publication number: WO 2025/127518

(57) **Abstract**

The present disclosure relates to a 5G communication system or a 6G communication system for supporting higher data rates beyond a 4G communication system such as long term evolution (LTE). A method performed by a user plane function (UPF) entity in a wireless communication system according to the present disclosure may comprise the steps of: receiving, from a session management function (SMF) entity, N4 session information including an explicit congestion notification (ECN) activation indicator and an ECN tuning parameter; identifying a QoS flow to which activation of an ECN-related function is to be applied on the basis of the ECN activation indicator; and performing data communication on the basis of the ECN activation indicator and the ECN tuning parameter. Various other embodiments identified through the specification are possible.

## Description

### [Technical Field]

The disclosure relates to a wireless communication system and, more specifically, to a method and an apparatus for controlling network congestion in a wireless communication system.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Disclosure of Invention]

### [Technical Problem]

Various embodiments set forth herein provide a method and an apparatus for controlling a network congestion situation that may occur inside a wireless communication system network.

### [Solution to Problem]

According to various embodiments set forth herein, a method performed by a user plane function (UPF) entity in a wireless communication system may include receiving, from a session management function (SMF) entity, N4 session information including an explicit congestion notification (ECN) activation indicator and an ECN tuning parameter, identifying a quality of service (QoS) flow to which activation of an ECN-related function is to be applied, based on the ECN activation indicator, and performing data communication, based on the ECN activation indicator and the ECN tuning parameter.

According to various embodiments set forth herein, a method performed by a user equipment (UE) in a wireless communication system may include transmitting, to a session management function (SMF) entity via a base station, a protocol data unit (PDU) session establishment request message including ECN information supportable in a PDU session connection, receiving, from the SMF entity via the base station, a PDU session establishment response message including an explicit congestion notification (ECN) activation indicator and an ECN tuning parameter, and performing data communication, based on the PDU session establishment response message, wherein the PDU session establishment response message includes identification information for a QoS flow to which activation of an ECN-related function is to be applied by the base station based on the ECN activation indicator.

According to various embodiments set forth herein, a user plane function (UPF) entity in a wireless communication system may include at least one transceiver and a controller coupled to the at least one transceiver. The controller may be configured to receive, from a session management function (SMF) entity, N4 session information including an explicit congestion notification (ECN) activation indicator and an ECN tuning parameter, identify a QoS flow to which activation of an ECN-related function is to be applied, based on the ECN activation indicator, and perform data communication, based on the ECN activation indicator and the ECN tuning parameter.

According to various embodiments set forth herein, a user equipment (UE) in a wireless communication system may include at least one transceiver and a controller coupled to the at least one transceiver. The controller may be configured to transmit, to a session management function (SMF) entity via a base station, a PDU session establishment request message including ECN information supportable in a PDU session connection, receive, from the SMF entity via the base station, a PDU session establishment response message including an explicit congestion notification (ECN) activation indicator and an ECN tuning parameter, and perform data communication, based on the PDU session establishment response message, wherein the PDU session establishment response message includes identification information for a QoS flow to which activation of an ECN-related function is to be applied by the base station based on the ECN activation indicator.

### [Brief Description of Drawings]

FIG. 1 illustrates an environment for deploying a 5G network on a cloud according to an embodiment of the disclosure.
FIG. 2 illustrates relationships between a 5G network and a virtual network according to an embodiment of the disclosure.
FIG. 3 illustrates an operation of controlling congestion by using an explicit congestion notification (ECN) of a transmission control protocol (TCP) in a wireless communication system according to an embodiment of the disclosure.
FIG. 4 illustrates a structure of a user plane packet header in a 5G network operating on a cloud according to an embodiment of the disclosure.
FIG. 5 illustrates an operation of activating an ECN function according to an embodiment of the disclosure.
FIG. 6 illustrates an operation of performing downlink transmission according to an embodiment of the disclosure.
FIG. 7 illustrates an operation of performing uplink transmission according to an embodiment of the disclosure.
FIG. 8 illustrates an operation of performing congestion control by using a transmission control rule according to an embodiment of the disclosure.
FIG. 9 illustrates an operation of a user plane function (UPF) entity according to an embodiment of the disclosure.
FIG. 10 illustrates an operation of a terminal according to an embodiment of the disclosure.
FIG. 11 illustrates a structure of a core network entity according to an embodiment of the disclosure.
FIG. 12 illustrates a structure of a base station according to an embodiment of the disclosure.
FIG. 13 illustrates a structure of a UE according to an embodiment of the disclosure.

With regard to the description of the drawings, the same or like reference signs may be used to designate the same or like elements.

### [Mode for the Invention]

Various aspects of the claimed subject matter are now described with reference to the drawings, wherein like reference numerals are used to refer to like elements throughout. In the following description, for the purpose of explanation, numerous specific details are set forth in order to provide a thorough understanding of one or more embodiments. It may be apparent, however, that such embodiment(s) may be implemented without these specific details.

The terms used in the disclosure are used merely to describe particular embodiments, and may not be intended to limit the scope of other embodiments. Expressions in the singular may include expressions in the plural unless the context clearly indicates otherwise. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

In the following description, terms referring to signals (e.g., message, signal, signaling, sequence, and stream), terms referring to resources (e.g., symbol, slot, frame, subframe, radio frame, subcarrier, resource element (RE), resource block (RB), bandwidth part (BWP), and occasion), terms referring to operations (e.g., step, method, process, and procedure), terms referring to data (e.g., information, parameter, variable, value, bit, symbol, and codeword), terms referring to channels, terms referring to control information (e.g., downlink control information (DCI), medium access control control element (MAC CE), and radio resource control (RRC) signaling), terms referring to network entities, terms referring to device components, and the like are illustratively used for the sake of descriptive convenience. Therefore, the disclosure is not limited by the terms as described below, and other terms having equivalent technical meanings may be used.

Various embodiments of the disclosure are described herein in connection with a wireless terminal and/or a base station. The wireless terminal may refer to a device providing voice and/or data connectivity to a user. The wireless terminal may be connected to a computing device such as a laptop computer or desktop computer, or it can be a self - contained device such as a personal digital assistant (PDA). The wireless terminal may also be called a system, a subscriber unit, a subscriber station, a mobile station, a mobile, a remote station, a remoter terminal, an access terminal, a user terminal, a terminal, a wireless communication device, a user agent, a user device, or a user equipment. The wireless terminal may be a subscriber station, a wireless device, a cellular telephone, a PCS telephone, a cordless telephone, a session initiation protocol (SIP) phone, a wireless local loop (WLL) station, a personal digital assistant (PDA), a handheld device having wireless connection capability, or other processing device connected to a wireless modem. The base station (e.g., access point) may refer to a device in an access network that communicates over the air-interface, through one or more sectors, with wireless terminals. The base station may act as a router between the wireless terminal and the rest of the access network, which can include an Internet Protocol (IP) network, by converting received air-interface frames to IP packets. The base station also coordinates management of attributes for the air interface.

A mobile communication network has been developed based on softwarization and virtualization of network functions, along with introduction of 5G communication technology. Conventional network functions have been developed/deployed in a closed architecture configured by dedicated hardware and software. However, with introduction of 5G communication technology, separation of hardware and software has been achieved, and network functions for providing an actual mobile communication network service have evolved to operate on a cloud in a form of software.

One of main characteristics of a cloud environment is execution of software in a virtualized environment. Such virtualization includes virtualization of computing resources for computing and also provides a network in a virtualized form. The virtualization refers to technologies for partitioning physical resources and providing, to each user, a function or performance in the same form as actual physical resources. In addition, a network also provides a virtual network function so that each user is provided with a function as if dedicated network resources are owned by each user. Such a virtual network includes methods for isolating each virtual network in a cloud or in a physical network environment shared by multiple users. The methods specifically employ a method of inserting an additional header into a packet generated in a virtual network, thereby distinguishing the packet from a packet of another network. Such a virtualized environment has an advantage in that it is possible to partition and use physical resources, and at the same time, a problem may occur in using a function required to be provided by a device or a network that is not virtualized.

Hereinafter, various embodiments disclosed in this document relate to a case in which a network function (NF) for providing 5G, in particular, a user plane function (UPF) entity for transferring a data packet of a user is deployed in a virtualized environment. The UPF entity is connected to a base station (RAN) and performs a role of transferring a user packet between the outside and a terminal. The UPF entity and the base station may be generally connected using a general packet radio service (GPRS) tunneling protocol-user plane (GTP-U) tunnel. A packet between the UPF entity operating in a virtualized network and the base station may further include header information for a virtualized network and GTP-U header information for operating a 5G network. In this case, in order for functions provided to a virtual network device to perform a role in an actual user service, information is transferred in consideration of a modified header of a virtual network or a mobile communication network, or a header needs to be modified. For example, as a representative function for supporting control of congestion of a user service flow by a network device, an explicit congestion notification (ECN) marking function may be used. ECN marking represents a series of operations of indicating whether congestion exists in an ECN field in an IP header of a transmitted and received data packet. In a virtualized network, in order for a network device to indicate whether congestion exists while transmitting and receiving uplink data or downlink data, ECN marking needs to be included in an IP header located at the innermost side so that ECN marking is transferred to a user terminal and an external server. Accordingly, a method allowing a function provided by a virtualized network device or a mobile communication network device to be transferred into an actual data packet is required.

Hereinafter, this document proposes a method enabling effective transmission control (flow control) and congestion control of a transport layer in a virtualized mobile communication network.

"Virtualization" refers to abstraction of hardware resources (e.g., computing resources, memory resources, and network resources). According to virtualization, hardware resources of network devices (e.g., general-purpose server devices) are abstracted and/or shared, and a part of entire hardware resources is used for performing a particular network function. For example, according to virtualization, multiple network functions may be performed in one network device.

In the following description, terms referring to network entities, terms referring to device components, and the like are illustratively used for the sake of descriptive convenience. Therefore, the disclosure is not limited by the terms as described below, and other terms having equivalent technical meanings may be used.

For reference, a transport network device referred to in this document may refer to devices operating on a path between a UPF operating on a cloud and a RAN. For example, a virtual switch, a virtual router, a physical switch, or a physical router may correspond to a transport network device.

Names mentioned in this document are described by adopting network entities used in a 5G communication system and terms used in a 5G communication system. For example, the 5G communication system described in this document may include a UPF entity processing a data packet and a session management function (SMF) entity controlling a rule related to processing of a data packet. In addition, for example, the 5G communication system described in this document may include entities that participate in selection of the SMF entity and the UPF entity, such as a network repository function (NRF) supporting discovery of an NF and a service communication proxy (SCP). In addition, a data session manager performing control related to a command transmitted from the SMF entity to the UPF entity may exist, and the data session manager may be a part of functions of the SMF entity or may be implemented as an internal function of the SMF entity. Hereinafter, each network function described in this document is described by being adopted from a 5G communication system, and even in a mobile communication network of Post-5G or 6G, an entity having a similar function may be operated by configuring a communication system according to an embodiment of the disclosure.

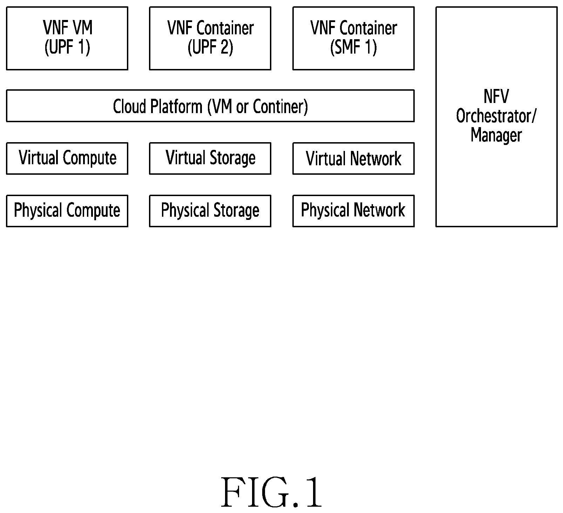

FIG. 1 illustrates an environment for deploying a 5G network on a cloud according to an embodiment of the disclosure. Specifically, FIG. 1 illustrates an example in which a network system for 5G mobile communication is provided in a cloud or a virtualized environment.

Referring to FIG. 1, an NFV environment representing an environment in which a network function is performed in a virtualized network device may include an application operating in a virtual machine (VM) or a container, virtualized physical resources (e.g., virtual compute, virtual storage, and virtual network) for providing the application or a network function (NF), and hardware resources (e.g., physical compute, physical storage, and physical network). A virtualized cloud platform may provide an environment in which applications are operable smoothly by supplying and connecting the virtualized resources to an actual virtual machine or container. Representative cloud platforms may include, for example, Red Hat OpenShift, Open Compute Project (OCP), and windrive. In addition, the NFV environment may include an orchestrator or a manager responsible for management of an overall virtualized network environment, deployment/management of an application, and management of virtual resources.

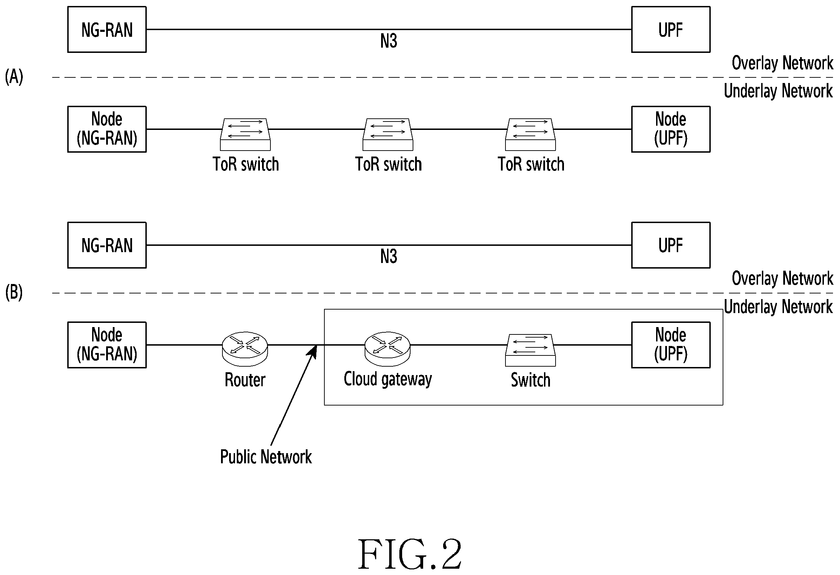

FIG. 2 illustrates relationships between a 5G network and a virtual network according to an embodiment of the disclosure. Specifically, FIG. 2 illustrates a state in which a UPF entity and a next generation radio access network (NG-RAN) operating in a 5G network operate on a virtual network.

A connection between network entities operating in a cloud is established through a virtual network (or an overlay network), and the virtual network may differ from a form recognized by actual 5G network (or an underlay network) entities. For example, a configuration of a cloud node or a network device providing an actual resource to an actual 5G network and a configuration of an application operating using a virtualized resource or a device in which the application is used may differ from each other.

Referring to FIG. 2 (A), the UPF entity and the NG-RAN may be connected through an N3 interface, which is a link through which a tunneled GTP-U packet is transmitted. Each entity using the N3 interface, that is, the NG-RAN and the UPF entity, may have been abstracted to recognize the N3 interface as a single link. However, although the N3 interface between the NG-RAN and the UPF is a single link from a viewpoint of a 5G user plane, an actual packet may be transferred through a path of a virtual network embedded over multiple physical links or devices from a viewpoint of a cloud.

FIG. 2 (B) illustrates a case in which the NG-RAN and the UPF are operated in different clouds or only one of the NG-RAN and the UPF is operated on a cloud. Specifically, illustrated is a case in which only a part corresponding to a core network of a mobile communication system is operated on a cloud, and the NG-RAN corresponding to a base station is operated at another location. In this case, a cloud gateway connecting a public network and a cloud network may additionally perform an operation of deleting a packet header for a virtual network so that a packet of a 5G network normally operates in the public network.

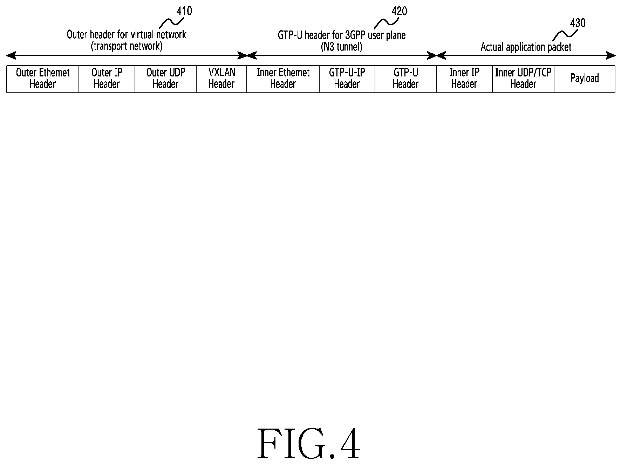

Meanwhile, in order to provide a virtual network, header information for facilitating processing of a virtual network packet may be additionally included by using a protocol such as a virtual local area network (VLAN) or a virtual extensible local area network (VxLAN). When the header information for facilitating processing of a virtual network packet is added, a physical network may process the packet by referring only to packet header information at the outermost side. Hereinafter, this will be described in detail with reference to FIG. 4.

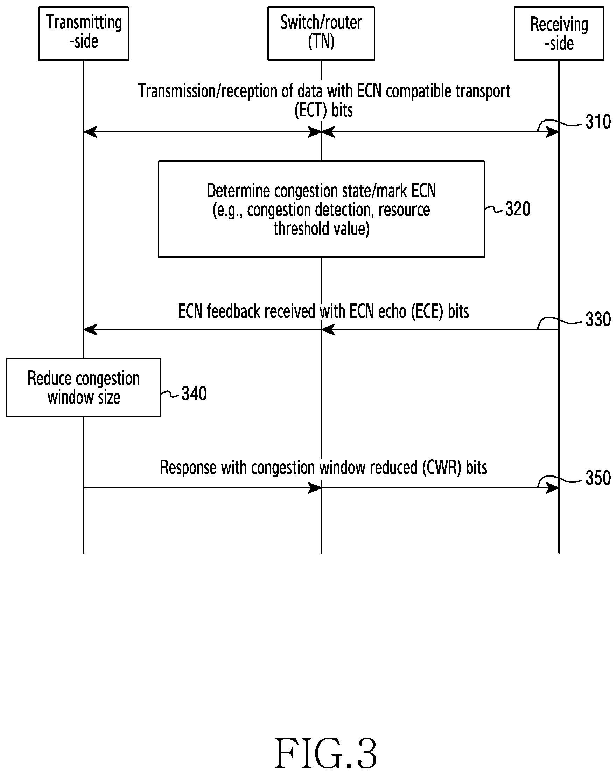

FIG. 3 illustrates an operation of controlling congestion by using an explicit congestion notification (ECN) of a transmission control protocol (TCP) in a wireless communication system according to an embodiment of the disclosure.

A representative protocol providing functions of transmission control and congestion control in a transport layer on a network is TCP. TCP is generally used together with an internet protocol (IP) protocol located in a network layer. TCP provides not only transmission control (flow control) and congestion control but also various functions, and multiple versions of algorithms actually provided by TCP exist. In a network connection based on TCP, a network device may provide information related to congestion.

When a data packet is transmitted using a TCP connection, a network may indicate that the data packet has experienced congestion in an explicit congestion notification (ECN) field in an IP header of data by considering an internal queue, buffer, and resource state of the network. The data packet indicated as having experienced congestion may be transferred from a transmitter-side to a receiver-side through a network device, and the receiver-side may perform an operation according to a congestion situation.

When a value of 2 bits of the ECN field is 00, this may indicate that an ECN function is not used. When the value of 2 bits of the ECN field is 10 or 01, an ECN capable transport (ECT) flag meaning that ECN is supported but a current load level at which a packet is transmitted and received in the network is normal may be configured. When the value of 2 bits of the ECN field is 11, a congestion experienced (CE) flag meaning that ECN is supported but the load of the network is not at a normal level and it may be difficult to maintain a current bitrate may be configured.

Referring to FIG. 3, an operation of a transmitting-side, a receiving-side, and a network device (for example, a switch or a router) between the transmitting-side and the receiving-side in a network connection based on TCP is illustrated.

In operation 310, a transmitting-side and a receiving-side may establish a TCP connection by using TCP and transmit a data packet. In the TCP connection, when the transmitting-side and the receiving-side are able to use an ECN function, the transmitting-side may indicate an ECN field in an IP header of a data packet transmitted to the receiving-side. For example, the transmitting-side of FIG. 3 may mark a bit value of an ECN field located in an IP header of a data packet transmitted to the receiving-side as 01 or 10. The ECN field marked as 01 or 10 may indicate that an ECT flag is configured.

In operation 320, a network device such as a switch or a router located on a path through which the data packet is transferred between the transmitting-side and the receiving-side may predict that the network device is to be in a congestion situation according to autonomous determination. The network device may read an IP header or a TCP header, and when a congestion situation of network communication is predicted, may mark the ECN field located in the IP header of the data packet as 11, thereby configuring a congestion experienced (CE) flag. Accordingly, the network device may transfer the data packet including the marked ECN field to the receiving-side to indicate the congestion situation.

In operation 330, the receiving-side having received, from the network device, the packet including the ECN field marked as 11 indicating the CE flag may configure an ECN-Echo (ECE) flag in a TCP header of an uplink packet (e.g., a TCP ACK) corresponding to the packet and transmit the uplink packet to the transmitting-side. Accordingly, the receiving-side may transmit feedback indicating that congestion has occurred to the transmitting-side.

In operation 340, the transmitting-side having received the feedback from the receiving-side may recognize that congestion has occurred and may perform a control operation according to a congestion situation. For example, the transmitting-side having received the feedback including the ECE flag in the TCP header from the receiving-side may reduce a size of a congestion window to decrease a data transmission rate.

In operation 350, the transmitting-side may transmit, to the receiving-side, a response message including information indicating that an operation of controlling congestion, such as reducing the size of the congestion window according to the ECE field, has been performed. For example, the transmitting-side may configure a congestion window reduced (CWR) flag in a TCP header of data transferring, to the receiving-side, the information indicating that the size of the congestion window has been reduced, and then transmit the data.

The receiving-side may recognize that the congestion control operation of the transmitting-side has been performed by receiving a packet in which the CWR flag of the TCP header is configured.

As described above, the transmitting-side, the receiving-side, and the network device may control a congestion situation that occurs in the network by using TCP. However, the meanings of fields and algorithms used in the process of controlling the congestion situation of the network by using TCP may vary depending on a version of the used TCP.

FIG. 4 illustrates a structure of a user plane packet header in a 5G network operating on a cloud according to an embodiment of the disclosure.

A user plane packet header transmitted over a virtual network may include additional header information to enable smooth transmission over the virtual network. As the additional header information, for example, a virtual local area network (VLAN) field extending a header of Ethernet may be used. In addition, as the additional header information, a virtual extensible LAN (VxLAN) in which a packet header corresponding to layer 3 is added to remove a limitation on a maximum number of virtual networks providable by a VLAN and to provide additional information may be used.

In an example, when a 5G network is implemented on a cloud, a VLAN header for supporting a virtual network and a GTP-U header for tunneling in a mobile communication network may be additionally inserted into a packet header transmitted in an N9 interface connecting a UPF entity and another UPF entity, and an N3 interface connecting a UPF entity and an RAN.

FIG. 4 shows a header structure of a user plane packet that may be measured in a link of a mobile communication network operating on a virtual network. Referring to FIG. 4, a user plane packet used in a virtual network may include an outer header portion 410 processed in the virtual network, a GTP-U header portion 420 processed in an N3 interface between a UPF entity and a base station, and an actual application packet portion 430 actually used between a transmitting-side and a receiving-side (e.g., a server and a UE).

As described above, in addition to a payload including data and a header of an actually transmitted packet, a GTP-U header and a VXLAN header may be added while the packet passes through a network device. In this case, a virtual network device processing a packet may process the packet by using an outer header including a VXLAN, which is located at the outer side. In addition, a packet transmitted and received by an application in a cloud, such as a UPF entity or an RAN, may be processed using an IP header including GTP-U, from which a virtual header has been removed. Accordingly, in transfer of a packet between a transmitting-side and a receiving-side that actually transmit and receive the packet, even when an ECN field in an IP header is marked by a network device (e.g., a switch or a router) supporting a virtualized network or a device supporting GTP-U, there may be a problem in that the ECN field is not delivered to the transmitting-side and the receiving-side. In addition, a network device supporting a virtualized network or a device supporting GTP-U are also unable to determine whether to configure an ECN field to be marked in an IP header of a VXLAN or a GTP-U header.

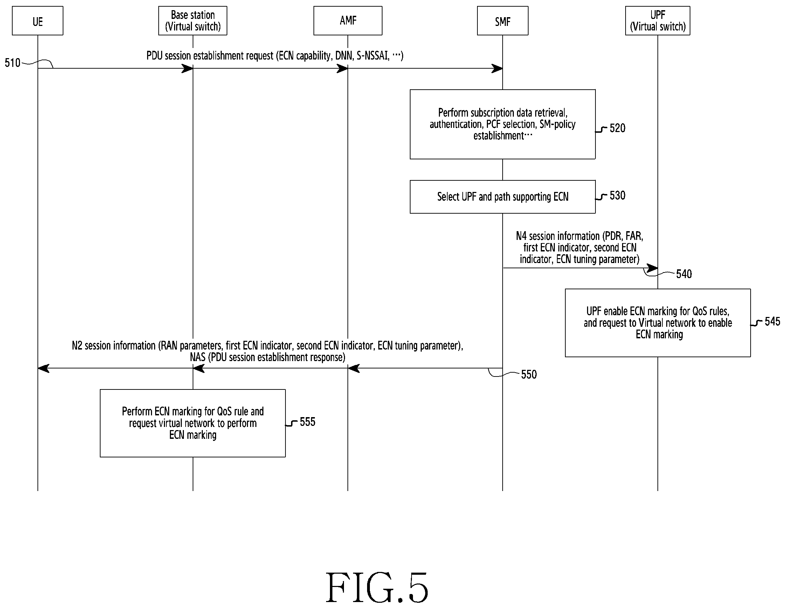

Hereinafter, FIGS. 5 to 10 propose a method of controlling a congestion situation, in which a network device (e.g., a switch or a router) supporting a virtualized network or a device supporting GTP-U marks an ECN field in an IP header and the marked ECN field is transferred to a transmitting-side and a receiving-side.

FIG. 5 illustrates an operation of activating an ECN function according to an embodiment of the disclosure. Specifically, FIG. 5 illustrates a procedure of activating the ECN function in order to control a congestion situation through an interaction among a 5G core network entity, a UE, and a base station. The ECN function may be a term collectively referring to marking an ECN field in a header of a packet or a function required to mark the ECN field.

In operation 510, a UE may transmit, to an SMF entity, a PDU session establishment request message in order to establish a new PDU session. For example, the UE may transmit the PDU session establishment request message to the SMF entity through a connected base station and an access and mobility management function (AMF) entity. A transmission procedure of the PDU session establishment request message may follow a message transmission procedure and method in a control plane of the 5G core network. However, the disclosure is not limited thereto.

According to an embodiment of the disclosure, ECN capability information may be included in the PDU session establishment request message. An ECN capability may include ECN information supportable for the UE or a service in a PDU session connection. In an example, the ECN capability information may specifically include information such as whether an ECN function is supported in the PDU session connection, a version of TCP, whether transmission based on a round trip time (RTT) is controllable, and a supportable transmission or congestion control algorithm. However, information included in the ECN capability is not limited thereto, and information related to ECN in addition to the above-mentioned information may be included. Meanwhile, the PDU session establishment request message may include information on a data network name (DNN) and single network slice selection assistance information (S-NSSAI), which are generally included when the PDU session establishment request message is transmitted, and may also include other information for PDU session establishment.

In operation 520, the SMF entity may perform an operation of determining a PDU session to be established, based on the PDU session establishment request message received from the UE. For example, the SMF entity may perform an operation such as retrieval of data to be subscribed to, authentication for a PDU session to be established, selection of a policy control function (PCF) entity, or establishment of an SM policy.

According to an embodiment of the disclosure, the SMF entity may determine whether the UE has authority to activate an ECN-related function, through the ECN capability information included in the PDU session establishment request message. In an example, even if the SMF entity does not explicitly receive the ECN capability information through the PDU session establishment request message, the SMF entity may obtain, based on local data, whether the UE or a user has authority to activate the ECN-related function, or a request of the UE or the user related to the ECN function.

In operation 530, the SMF entity may select a UPF entity and a path to establish the PDU session requested by the UE. In an example, the SMF entity may select a UPF entity and a path supporting the ECN function, based on the information received from the UE in operation 510. The SMF entity may obtain candidate UPF entities according to an NRF or a local policy, and may select a network function (NF) profile capable of supporting the ECN function from among respective NF profiles of the candidate UPF entities. In this case, the SMF entity may select, as a UPF entity used for establishing the PDU session, a UPF entity matching the selected NF profile.

In operation 540, the SMF entity may establish an N4 session to transfer information related to actual packet processing to the UPF entity selected in operation 530. The SMF entity may transmit, to the UPF entity as N4 session information, rules such as a packet detection rule (PDR), a forwarding action rule (FAR), and a QoS enforcement rule (QER) for identifying and managing a QoS flow required to be processed in a newly established PDU session.

According to an embodiment of the disclosure, the SMF entity may transmit, to the UPF entity, parameters related to activation of the ECN function, by including the parameters in the N4 session information. The parameters related to activation of the ECN function may include a first ECN indicator causing the UPF entity to process an ECN field and a second ECN indicator causing a network device to process the ECN field. The first ECN indicator may be referred to as a 5G ECN indicator, and the second ECN indicator may be referred to as a TN ECN indicator. However, the disclosure is not limited thereto. The parameters related to activation of the ECN function may be transmitted from the SMF entity to the UPF entity by adding a new field to the existing PDR, FAR, and QER. However, a method of transferring the parameters related to activation of the ECN function is not limited thereto, and the parameters may be transferred separately.

The first ECN indicator may indicate the UPF entity and a RAN to mark "11" in an ECN field in a user packet header according to a resource situation to configure a CE flag indicating a congestion situation. For example, when a current link utilization (link use or link utilization level) of the UPF entity exceeds a particular threshold value (threshold), the UPF entity may mark an ECN field in a user packet header as "11" to configure the CE flag.

In an example, when the ECN field is simultaneously used for congestion situation control and low latency, low loss, and scalable throughput (L4S), the first ECN indicator may indicate a change of an ECT flag configuration so as to prevent an incorrect operation from being performed. For example, when "01" is marked in the ECN field to indicate L4S traffic for L4S, a collision may occur according to whether the traffic is L4S traffic, and thus, in order to avoid the collision, modification of the ECT flag of the ECN field to "10" may be indicated. Such an operation for preventing a collision when the ECN field is used for L4S traffic and congestion control may be performed in an operation in which the UPF entity receives a packet of a server through a link of an N6 interface or an operation in which the RAN receives a packet from the UE and transfers the packet to the UPF entity through an N3 interface.

The second ECN indicator may indicate an operation related to the ECN function in a transport network (TN) through which the UPF processes a QoS flow or a PDU session. In an example, in order to use ECN in the transport network, a packet may need to be processed in a process of generating an additional packet header such as VXLAN so that the packet passes through a virtual network. The second ECN indicator may indicate the UPF entity to configure ECT so that the ECN field in a packet header is usable in a process of transmitting and receiving a packet, and to copy CE to an IP header of a user packet, which is located at an innermost side, when the CE is configured in an outermost header in a process of decapsulating the packet for the virtual network. In addition, the second ECN indicator may be used when a network device of the virtual network performs ECN marking on a packet transmitted and received between the UPF entity and the base station.

In an example, the SMF entity may transmit an ECN tuning parameter to the UPF entity by adding the ECN tuning parameter to the N4 session information. The ECN tuning parameter may include information on a condition under which the UPF entity, the RAN, or a transport network device between the UPF entity and the RAN performs ECN marking. For example, the ECN tuning parameter may include information on a condition in which, when a buffer of the UPF entity capable of accommodating a packet is equal to or greater than 50%, CE is marked with a probability of 30%, and, when the buffer is equal to or greater than 80%, CE is marked with a probability of 100%. The ECN tuning parameter transmitted to the UPF entity may specifically include a monitoring parameter for a buffer of the UPF or RAN capable of accommodating a packet, a threshold value (threshold), and a combination of ECN marking probabilities according to the threshold value.

In operation 545, the UPF entity may receive, from the SMF entity, the N4 session information including information such as the first ECN indicator, the second ECN indicator, and the ECN tuning parameter. The UPF entity may activate a function related to ECN so as to enable a QoS flow associated with the received information to use the ECN field.

In operation 550, when the PDU session is successfully established, the SMF entity may transmit, to the UE, a PDU session establishment success message. In an example, the SMF entity may transmit, to the base station, parameters related to activation of the ECN function by including the parameters in the PDU session establishment success message.

Alternatively, the SMF entity may transmit the parameters related to activation of the ECN function by including the parameters in N2 session information transmitted to the base station through the AMF entity.

The parameters related to activation of the ECN function may include a first ECN indicator causing the base station to process the ECN field and a second ECN indicator causing a network device to process the ECN field. Since the first ECN indicator and the second ECN indicator are identical to the first ECN indicator and the second ECN indicator transferred by the SMF entity to the UPF entity in operation 540, a detailed description thereof will be omitted.

In an example, the SMF entity may transmit an ECN tuning parameter by including the ECN tuning parameter in the PDU session establishment success message or the N2 information. The ECN tuning parameter transmitted to the RAN may specifically include a monitoring parameter, a threshold value, and a combination of ECN marking probabilities according to the threshold value, for a buffer of the RAN, reflecting a buffer size, a received signal strength, and mobility of the user, collectively. Since the RAN may additionally consider information on a wireless resource compared to the UPF entity, information included in the ECN tuning parameter transmitted by the SMF entity to the UPF entity and information included in the ECN tuning parameter transmitted by the SMF entity to the RAN may be different. That is, parameters to be monitored for determining whether an ECN condition is satisfied may be different between the UPF entity and the RAN.

In operation 555, the RAN may receive, through the PDU session establishment success message or N2 session information, information such as the first ECN indicator, the second ECN indicator, and the ECN tuning parameter. The RAN may activate a function related to ECN so as to enable a QoS flow associated with the received information to use the ECN field. For example, the RAN may perform ECN marking for a QoS rule, based on the received first ECN indicator. In addition, the RAN entity may perform, based on the received second ECN indicator, an operation of requesting a device of the transport network to perform ECN marking on an ECN field in a header of a transmitted and received packet.

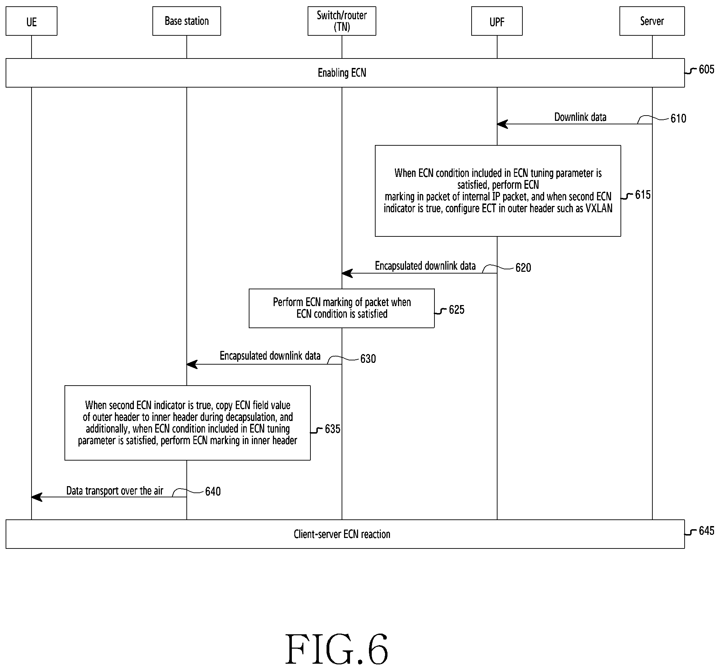

Based on the above operations, the UPF entity and the base station may activate the ECN function in a virtualized network environment. Thereafter, the UPF entity and the base station may mark an ECN field in a packet according to a congestion state, based on the activated ECN function while performing uplink or downlink data communication. Hereinafter, detailed descriptions will be provided with reference to FIGS. 6 to 7.

FIG. 6 illustrates an operation of performing downlink transmission according to an embodiment of the disclosure.

Referring to FIG. 6, in operation 605, a UE, a server, a RAN (or a base station) of a 5G network, a UPF, and a network device (e.g., a switch or a router) used in a virtualized network may activate an ECN-related function so as to be able to perform ECN marking on an ECN field of a header in a transmitted and received packet. In operation 605, a process in which each device activates the ECN-related function may follow the procedure of activating the ECN function in FIG. 5.

In operation 610, the server may transmit downlink (DL) data to the UPF through an N6 interface. In an example, an ECN field of the downlink data may be marked as 01 or 10. The ECN field marked as 01 or 10 may indicate that an ECT flag is configured. The server may transmit, to the UPF entity, the downlink data for which the ECT flag is configured.

In operation 615, the UPF entity having received a packet through the N6 interface may perform an ECN function-related algorithm of the UPF entity and, according to a result thereof, may mark an ECN field in an IP header of the packet as 11, thereby configuring a CE flag. In this case, a criterion for performing, by the UPF entity, ECN marking in the IP header of the packet of the downlink data may be based on an ECN tuning parameter received by the UPF entity from an SMF entity. For example, the UPF entity may perform ECN marking, based on the ECN tuning parameter received in operation 540 of FIG. 5.

In an example, when a function of using the ECN field, such as L4S, is activated in a mobile communication network, the UPF entity may configure, among 01 or 10, an ECT flag of a field value other than a field value configured by L4S, in order to prevent a collision with the ECN field marked in the IP header of the packet of the downlink data.

In an example, an additional outer header such as VXLAN may be attached to the packet of the downlink data transmitted by the UPF entity to the base station so that a virtual network device or a network interface device of a virtual machine or a virtual container running the UPF entity is able to transmit the packet to the base station in a virtual network. In an example, when a second ECN indicator received from the SMF entity in operation 605 is true, the UPF entity may perform ECN marking in an IP header of the additionally attached VXLAN header as 01 or 10 indicating an ECT flag.

In operation 620, the UPF entity may encapsulate the downlink data in order to transmit the downlink data to the base station through a virtual network. The virtual network may be abstracted as an N3 interface using a GTP-U tunnel in a mobile communication network.

In operation 625, a virtual network device located between the UPF entity and the base station may perform ECN marking on the packet when the packet of the received downlink data satisfies an ECN-related condition, based on an algorithm of the virtual network device. For example, when an IP header of the packet of the data received from the UPF entity is ECN-marked as ECT (01) or ECT (10), the virtual network device, such as a virtual switch or a virtual router located between the UPF entity and the base station, may perform ECN marking as CE (11) on an outer header of the packet by using the algorithm of the virtual network device. Here, the outer header may refer to a header located outside an actual application packet (e.g., as indicated by reference numeral 430 in FIG. 4) and a GTP-U header (e.g., as indicated by reference numeral 420 in FIG. 4). For example, the outer header may refer to the outer header 410 for the virtual network in FIG. 4.

In operation 630, the virtual network device may transfer the downlink data having been encapsulated by the UPF entity to the base station.

In operation 635, the base station may receive the downlink data having been encapsulated by the UPF entity from the virtual network. The base station may remove a packet header, such as VXLAN, having been added by the UPF entity in order to transmit the data to the base station through the virtual network.

The downlink data received by the base station may have the ECN field of the outer header which has been marked as CE (11) by a device of the virtual network. In an example, in a case where the base station receives a second ECN indicator from the SMF entity in operation 605 (in particular, e.g., in operation 550 of FIG. 5), when the second ECN indicator is true, the base station may copy an ECN field value of the outer header of the packet of the downlink data, which has been marked as CE (11), to an IP header of a GTP-U header. The copy operation of the base station may be performed while the base station removes the packet header, such as VXLAN, having been added to the packet of the encapsulated downlink data.

In an example, the base station may remove the GTP-U header from the packet from which the outer header such as VXLAN has been removed, according to an algorithm of the base station, and perform an operation for transmitting the packet to the UE through a radio interface. In an example, the base station may perform ECN marking as CE (11) in an inner header of the packet to be transmitted to the UE, based on the algorithm of the base station or based on an ECN tuning parameter transferred from the SMF entity through the AMF entity in operation 605. Here, the inner header may refer to a header portion corresponding to an actual application packet (e.g., as indicated by reference numeral 430 in FIG. 4).

In operation 640, the base station may transmit the downlink data to the UE. In an example, the downlink data transmitted by the base station to the UE may be a packet in which the inner header is ECN-marked as CE (11).

In operation 645, the UE having received the downlink data from the base station may identify an ECN field marked in the inner header in the packet of the downlink data. In an example, the UE may control a congestion situation according to a value of the identified ECN field. For example, the UE having identified the ECN field marked as CE (11) in the inner header may perform an operation of controlling the congestion situation, such as reducing a size of a congestion window.

As described above, when congestion is expected according to a network situation, an ECN field may be marked in data transmitted and received between the UE and the server to recognize the congestion situation through an explicit manner. Accordingly, the UE may perform a congestion control operation according to the congestion situation to prevent the congestion situation in advance.

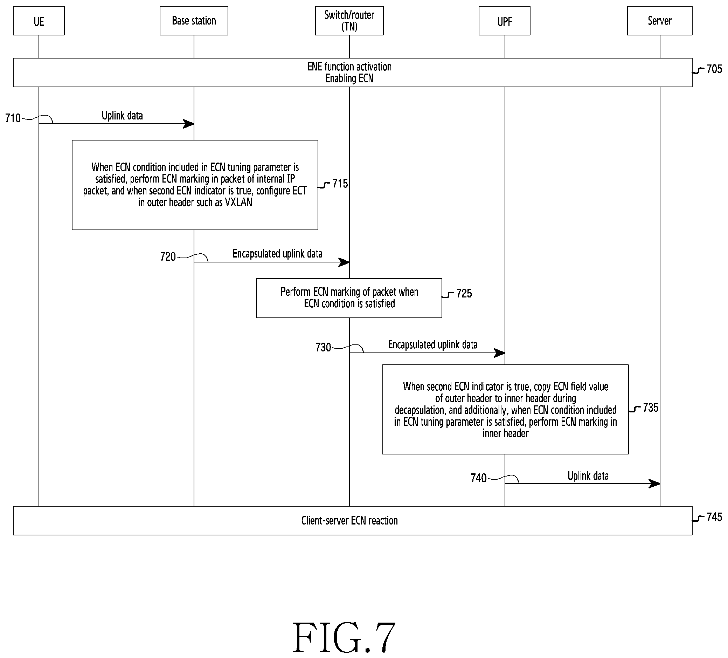

FIG. 7 illustrates an operation of performing uplink transmission according to an embodiment of the disclosure.

Referring to FIG. 7, in operation 705, a UE, a server, a RAN (or a base station) of a 5G network, a UPF, and a device (e.g., a switch or a router) of a virtualized transport network may activate an ECN-related function so as to be able to perform ECN marking on an ECN field of a header in a transmitted and received packet. In operation 605, a process in which each device activates the ECN-related function may follow the procedure of activating the ECN function in FIG. 5.

In operation 710, the UE may transmit uplink (UL) data to the base station. In an example, an ECN field of the uplink data may be marked as 01 or 10. The ECN field marked as 01 or 10 may indicate that an ECT flag is configured. The UE may transmit, to the base station, the downlink data for which the ECT flag is configured.

In operation 715, the base station (or RAN) having received a packet from the UE may perform an ECN function-related algorithm of the base station and, according to a result thereof, may mark an ECN field in an IP header of the packet as 11, thereby configuring a CE flag. In this case, a criterion for performing, by the base station, ECN marking in the IP header of the packet of the uplink data may be based on an ECN tuning parameter received by the base station from an SMF entity. For example, the UPF entity may perform ECN marking, based on the ECN tuning parameter received in operation 550 of FIG. 5.

In an example, when a function of using the ECN field, such as L4S, is activated in a mobile communication network, the base station may configure, among 01 or 10, an ECT flag of a field value other than a field value configured by L4S, in order to prevent a collision with the ECN field marked in the IP header of the packet of the uplink data.

In an example, an additional outer header such as VXLAN may be attached to the packet of the downlink data transmitted by the base station to the UPF entity so that a virtual network device or a network interface device of a virtual machine or a virtual container running the UPF entity is able to transmit the packet to the UPF entity in a virtual network. In an example, when a second ECN indicator received from the SMF entity in operation 605 is true, the base station may perform ECN marking in an IP header of the VXLAN header additionally attached to the packet of the uplink data as ECT (01) or ECT (10).

In operation 720, the base station may encapsulate the uplink data in order to transmit the uplink data to the UPF entity through a virtual network. The virtual network may be abstracted as an N3 interface using a GTP-U tunnel in a mobile communication network.

In operation 725, a virtual network device located between the UPF entity and the base station may perform ECN marking on the packet when the packet of the received uplink data satisfies an ECN-related condition, based on an algorithm of the virtual network device. For example, when an IP header of the packet of the uplink data received from the base station is ECN-marked as ECT (01) or ECT (10), the virtual network device, such as a virtual switch or a virtual router located between the UPF entity and the base station, may perform ECN marking, as CE (11), of an ECN field in an outer header of the packet by using the algorithm of the virtual network device. Here, the outer header may refer to a header located outside an actual application packet (e.g., as indicated by reference numeral 430 in FIG. 4) and a GTP-U header (e.g., as indicated by reference numeral 420 in FIG. 4). For example, the outer header may refer to the outer header 410 for the virtual network in FIG. 4.

In operation 730, the virtual network device may transfer the uplink data having been encapsulated by the base station to the UPF entity.

In operation 735, the UPF entity may receive the uplink data having been encapsulated by the base station from the virtual network. The UPF entity may remove a packet header, such as VXLAN, having been added by the base station in order to transmit the data to the UPF entity through the virtual network.

The uplink data received by the UPF entity may have the ECN field of the outer header which has been marked as CE (11) by a device of the virtual network. In an example, in a case where the UPF entity receives a second ECN indicator from the SMF entity in operation 605 (in particular, e.g., in operation 540 of FIG. 5), when the second ECN indicator is true, the UPF entity may copy an ECN field value of the outer header of the packet of the uplink data, which has been marked as CE (11), to an IP header of a GTP-U header. The copy operation of the UPF entity may be performed while the UPF entity removes the packet header, such as VXLAN, having been added to the packet of the encapsulated uplink data.

In an example, the UPF entity may remove the GTP-U header from the packet from which the outer header, such as VXLAN, has been removed, according to an algorithm of the UPF entity, and perform an operation for transmitting the packet to a data network (DN) (or a server in the data network) through an N6 interface. In an example, the UPF entity may perform ECN marking as CE (11) in an inner header of the packet to be transmitted to the UE, based on the algorithm of the UPF entity or based on an ECN tuning parameter transferred from the SMF entity in operation 605. Here, the inner header may refer to a header portion corresponding to an actual application packet (e.g., as indicated by reference numeral 430 in FIG. 4).

In operation 740, the UPF entity may transmit the uplink data to the data network. In an example, the uplink data transmitted by the UPF entity to the data network may be a packet in which the inner header is ECN-marked as CE (11).

In operation 745, the server in the data network having received the uplink data from the UPF entity may identify an ECN field marked in the inner header in the packet of the uplink data. In an example, the server in the data network may control a congestion situation according to a value of the identified ECN field.

As described above, when congestion is expected according to a network situation, an ECN field may be marked in data transmitted and received between the UE and the server to recognize the congestion situation through an explicit manner. Accordingly, the server in the data network may perform a congestion control operation according to the congestion situation to prevent the congestion situation in advance.

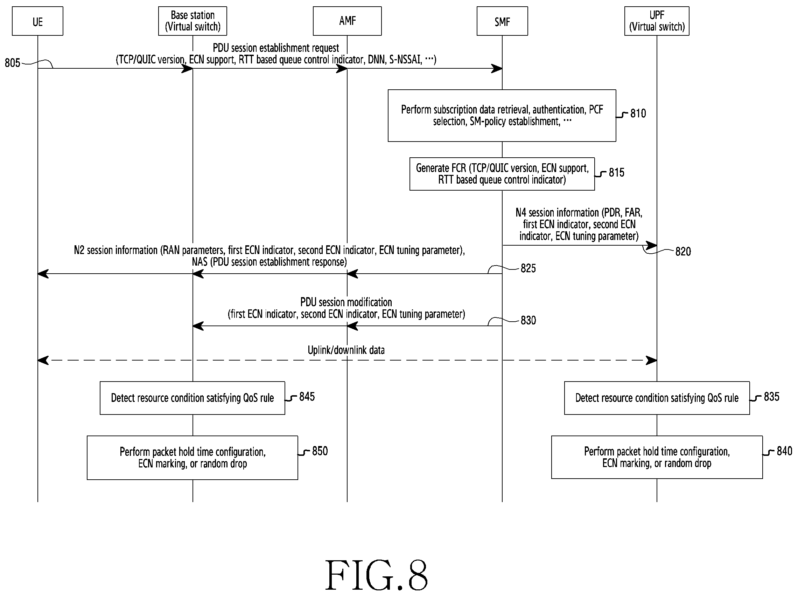

FIG. 8 illustrates an operation of performing congestion control by using a transmission control rule according to an embodiment of the disclosure.

When a protocol supporting transmission amount control (flow control) and congestion control, such as TCP or Quick UDP Internet Connection (QUIC), is used, a network may efficiently resolve or prevent a congestion situation by detecting the congestion situation or transferring information indicating the congestion situation. In the case of performing congestion control using TCP, a size of a congestion control window of TCP needs to be first determined. As a method of determining the size of the congestion control window of TCP, an additive increase multiplicative decrease (AIMD) method of, when a speed of data exceeds or is less than a threshold value, performing calculation by increasing or decreasing the speed, or a method of performing calculation using a minimum round trip time (RTT_min) and bandwidth information by utilizing a round trip time (RTT) may be used.

A network operator may drop a packet, configure an ECN field in a packet of data transmitted and received, or intentionally delay a packet in order to resolve situations of an increase in traffic, depletion of resources, or occurrence of congestion.

According to an embodiment of the disclosure, a flow control rule (FCR) may be defined in addition to data processing rules such as a packet detection rule (PDR), a forwarding action rule (FAR), and a QoS enforcement rule (QER), to configure actions for resolving a particular situation (e.g., situations of an increase in traffic, depletion of resources, or occurrence of congestion) to be performed. The PDR may define the FCR by limiting specification of target traffic to which the FCR needs to be applied. <Table 1> below describes a structure in which an identifier for the FCR is added so as to enable traffic flows corresponding to the PDR defined in 3GPP to apply the FCR. However, the FCR may be defined not only as a method of being newly defined separately from the existing rules but also as a method of adding an action condition and action content of the FCR to the existing rules.

**[Table 1]**

| **Attribute** | | **Description** | **Comment** |
|---|---|---|---|
| N4 Session ID | | Identifies the N4 session associated to this PDR. NOTE 5. | |
| Rule ID | | Unique identifier to identify this rule. | |
| Precedence | | Determines the order, in which the detection information of all rules is applied. | |
| Packet | Source interface | Contains the values "access side", "core side", "SMF", "N6-LAN", "5G VN internal". | Combination of UE IP address (together with Network instance, if necessary), CN tunnel info, |
| Detection | UE IP address | One IPv4 address and/or one IPv6 prefix with prefix length (NOTE 3). | packet filter set, application identifier, Ethernet PDU Session |
| Information .NOTE 4. | Network instance (NOTE 1) | Identifies the Network instance associated with the incoming packet. | Information and QFI are used for traffic detection. Source interface identifies the |
| | CN tunnel info | CN tunnel info on N3, N9 interfaces, i.e. F-TEID. | interface for incoming packets |
| | Packet Filter Set | Details see clause 5.7.6. | where the PDR applies, e.g. from access side (i.e. uplink), |
| | Application identifier | | from core side (i.e. down-link), |
| | QoS Flow ID | Contains the value of 5QI or non-standardized QFI. | from SMF, from N6-LAN (i.e. the |
| | Ethernet PDU Session Information | Refers to all the (DL) Ethernet packets matching an Ethernet PDU session, as further described in clause 5.6.10.2 and in TS 29.244 [65]. | DN), or from "5G VN internal" (i.e. local switch). |
| | Framed Route Information | Refers to Framed Routes defined in clause 5.6.14. | Details like all the combination possibilities on N3, N9 interfaces are left for stage 3 decision. |
| | FQDN Filter for DNS Query | Contains one or more FQDN, FQDN range, and/or any FQDN. | The FQDN or FQDN range only used for detection of plain DNS Query message (i.e. not subject to ciphering). The usage is described in TS 23.548 [130]. |
| | Protocol Description | Indicates service protocol used by the flow (NOTE 8). | |
| Packet replication and detection carry on information | Packet replication skip information NOTE 7 | Contains UE address indication or N19/N6 indication. If the packet matches the packet replication skip information, i.e. source address of the packet is the UE address or the packet has been received on the interface in the packet replication skip information, the UP function neither creates a copy of the packet nor applies the corresponding processing (i.e. FAR, QER, URR). Otherwise the UPF performs a copy and applies the corresponding processing (i.e. FAR, QER, URR). | |
| NOTE 6 | Carry on indication | Instructs the UP function to continue the packet detection process, i.e. lookup of the other PDRs. | |
| Outer header removal | | Instructs the UP function to remove one or more outer header(s) (e.g. IP+UDP+GTP, IP + possibly UDP, VLAN tag), from the incoming packet. | Any extension header shall be stored for this packet. |
| Forwarding Action Rule ID (NOTE 2) | | The Forwarding Action Rule ID identifies a forwarding action that has to be applied. | |
| Multi-Access Rule ID (NOTE 2) | | The Multi-Access Rule ID identifies an action to be applied for handling forwarding for a MA PDU Session. | |
| List of Usage Reporting Rule ID(s) | | Every Usage Reporting Rule ID identifies a measurement action that has to be applied. | |
| List of QoS Enforcement Rule ID(s) | | Every QoS Enforcement Rule ID identifies a QoS enforcement action that has to be applied. | |
| **List of Flow Control Rule ID(s)** | | **Describe flow control mechanisms applied to QoS flow such as packet drop, ECN marking, Traffic Shaping, AQM strategy** | |

Table 2 describes information on the FCR. The FCR may include information on a performance indicator or a parameter required to be monitored, a condition for performing an action, and an action to be applied or an action ID.

**[Table 2]**

| **Attribute** | **Description** | **Comment** |
|---|---|---|
| N4 Session ID | Identifies the N4 session associated to this FCR. | |
| Rule ID | Unique identifier to identify this information. | |
| Monitoring Parameters | Identifies the parameters to monitor, and this parameter will be used by condition check. | |
| Condition | Describe when the action will be triggered, by the combination of Monitoring parameters. It could contain threshold, range, and logical statements. | e.g.)UPF - Buffer Size, Burstiness, Average Queuing delay, CPU/Memory resource usage |
| Action | Describe the action. Action could be referred using Action ID, or Action can be described. Action can contain probability how much portion of packets will be applied for this action. | e.g.) if Queuing delay > 1ms, then mark CE(11) with 50% probability. |

The performance indicator or a parameter required to be monitored may include, for example, a buffer size, a buffer usage, an overall queuing delay, and a CPU/memory usage. The condition for performing an action may be configured as a combination of the performance indicators or parameters required to be monitored. When the condition for performing an action is satisfied, the defined action may be performed. For example, when the overall queuing delay exceeds 1ms, an action of marking CE (11) indicating a congestion situation in an ECN field of a header in a packet of data transmitted and received may be performed with a probability of 50%.

FIG. 8 illustrates a method of controlling a QoS flow, a TCP flow, or a QUIC flow by using the FCR described above. Referring to FIG. 8, in operation 805, a UE may transmit, to an SMF entity, a PDU session establishment request message to establish a new PDU session. For example, the UE may transmit the PDU session establishment request message to the SMF entity through a connected base station and an access and mobility management function (AMF) entity. A transmission procedure of the PDU session establishment request message may follow a message transmission procedure and method in a control plane of a 5G core network. However, the disclosure is not limited thereto.

According to an embodiment of the disclosure, the PDU session establishment request message may include information such as a version of TCP or QUIC supported by the UE, whether an ECN function is supported in a PDU session connection, and a queue control indicator based on an RTT. The information may be information required for interworking between the UE and a network entity, and all information is not required to be included in the PDU session establishment request message and may be selectively included. Meanwhile, the information may be different from information included in a PDU session establishment request message in operation 510 of FIG. 5. In addition, the PDU session establishment request message may include information on a DNN and S-NSSAI, which are generally included when the PDU session establishment request message is transmitted, and may also include other information for PDU session establishment.

In operation 810, the SMF entity may perform an operation of determining a PDU session to be established, based on the PDU session establishment request message received from the UE. For example, the SMF entity may perform an operation such as retrieval of data to be subscribed to, authentication for a PDU session to be established, selection of a policy control function (PCF) entity, or establishment of an SM policy.

In operation 815, the SMF entity may generate a PDR and an FCR for a QoS flow that may exist in a PDU session to be generated for transmission amount control or congestion control. The SMF entity may generate the PDR and the FCR by adding an identifier for the FCR to the PDR defined in existing 3GPP as shown in <Table 1> described above, and by defining a monitoring parameter, a condition, and an action of the FCR as shown in <Table 2>. Unlike the SMF entity of FIG. 5, the SMF entity of FIG. 8 may define the FCR as a new data control rule, and may additionally define information on the FCR in the PDR in order to use the FCR. A UPF entity and the base station to which the FCR or a new data control rule similar to the FCR, which is configured by the SMF entity, is applied may perform an operation of controlling a transmission amount by monitoring a transmission situation of data according to the rule.

In addition, the SMF entity may select a UPF entity and a path in order to establish the PDU session requested by the UE. In an example, the SMF entity may select a UPF entity and a path supporting the ECN function, based on the information received from the UE in operation 805. The SMF entity may obtain candidate UPF entities according to an NRF or a local policy, and may select a network function (NF) profile capable of supporting the ECN function from among respective NF profiles of the candidate UPF entities. In this case, the SMF entity may select, as a UPF entity used for establishing the PDU session, a UPF entity matching the selected NF profile.

In operation 820, the SMF entity may establish an N4 session to transfer a rule related to actual packet processing to the UPF entity selected in operation 815. The SMF entity may transmit, to the UPF entity as N4 session information, rules such as a forwarding action rule (FAR) and a QoS enforcement rule (QER) for identifying and managing a QoS flow required to be processed in a newly established PDU session, and the rules such as the PDR and FCR generated in operation 815.

In an example, the SMF entity may transmit, to the UPF entity, parameters related to activation of the ECN function, by including the parameters in the N4 session information. The parameters related to activation of the ECN function may include a first ECN indicator causing the UPF entity to process an ECN field and a second ECN indicator causing a network device to process the ECN field. The first ECN indicator may be referred to as a 5G ECN indicator, and the second ECN indicator may be referred to as a TN ECN indicator. However, the disclosure is not limited thereto. The parameters related to activation of the ECN function may be transmitted from the SMF entity to the UPF entity by adding a new field to the existing PDR, FAR, and QER. However, a method of transferring the parameters related to activation of the ECN function is not limited thereto, and the parameters may be transferred separately.

The first ECN indicator may indicate the UPF entity and a RAN to mark "11" in an ECN field in a user packet header according to a resource situation to configure a CE flag indicating a congestion situation. For example, when a current link utilization (link use or link utilization level) of the UPF entity exceeds a particular threshold value (threshold), the UPF entity may mark an ECN field in a user packet header as "11" to configure the CE flag.

In an example, when the ECN field is simultaneously used for congestion situation control and low latency, low loss, and scalable throughput (L4S), the first ECN indicator may indicate a change of an ECT flag configuration so as to prevent an incorrect operation from being performed. For example, when "01" is marked in the ECN field to indicate L4S traffic for L4S, a collision may occur according to whether the traffic is L4S traffic, and thus, in order to avoid the collision, modification of the ECT flag of the ECN field to "10" may be indicated. Such an operation for preventing a collision when the ECN field is used for L4S traffic and congestion control may be performed in an operation in which the UPF entity receives a packet of a server through a link of an N6 interface or an operation in which the RAN receives a packet from the UE and transfers the packet to the UPF entity through an N3 interface.

The second ECN indicator may indicate an operation related to the ECN function in a transport network (TN) through which the UPF processes a QoS flow or a PDU session. In an example, in order to use ECN in the transport network, a packet may need to be processed in a process of generating an additional packet header such as VXLAN so that the packet passes through a virtual network. The second ECN indicator may indicate the UPF entity to configure ECT so that the ECN field in a packet header is usable in a process of transmitting and receiving a packet, and to copy CE to an IP header of a user packet, which is located at an innermost side, when the CE is configured in an outermost header in a process of decapsulating the packet for the virtual network. In addition, the second ECN indicator may be used when a network device of the virtual network performs ECN marking on a packet transmitted and received between the UPF entity and the base station.

In an example, the SMF entity may transmit an ECN tuning parameter to the UPF entity by adding the ECN tuning parameter to the N4 session information. The ECN tuning parameter may include information on a condition under which the UPF entity, the RAN, or a transport network device between the UPF entity and the RAN performs ECN marking. For example, the ECN tuning parameter may include information on a condition in which, when a buffer of the UPF entity capable of accommodating a packet is equal to or greater than 50%, CE is marked with a probability of 30%, and, when the buffer is equal to or greater than 80%, CE is marked with a probability of 100%. The ECN tuning parameter transmitted to the UPF entity may specifically include a monitoring parameter, a threshold value, and a combination of ECN marking probabilities according to the threshold value, for a buffer of the UPF or RAN capable of accommodating a packet.

In operation 825, when the PDU session is successfully established, the SMF entity may transmit, to the UE, a PDU session establishment success message. In an example, the SMF entity may transmit, to the base station, the parameters related to activation of the ECN function transmitted in operation 820 by including the parameters in the PDU session establishment success message.

Alternatively, the SMF entity may transmit the parameters related to activation of the ECN function by including the parameters in N2 session information transmitted to the base station through the AMF entity.

In an example, the SMF entity may transmit an ECN tuning parameter by including the ECN tuning parameter in the PDU session establishment success message or the N2 information. The ECN tuning parameter transmitted to the RAN may specifically include a monitoring parameter, a threshold value, and a combination of ECN marking probabilities according to the threshold value, for a buffer of the RAN, reflecting a buffer size, a received signal strength, and mobility of the user, collectively. Since the RAN may additionally consider information on a wireless resource compared to the UPF entity, information included in the ECN tuning parameter transmitted by the SMF entity to the UPF entity in operation 820 and information included in the ECN tuning parameter transmitted by the SMF entity to the RAN in operation 825 may be different. That is, parameters to be monitored for determining whether an ECN condition is satisfied may be different between the UPF entity and the RAN.

In an example, the SMF entity may additionally transmit, in the PDU session establishment success message or N2 information, information on a parameter required to be monitored, a condition, and an action required to be performed when the condition is satisfied, for a packet in a target QoS flow. In this case, the transmitted information may include information different from a monitoring parameter, a condition, and an action included in the FCR transmitted from the SMF entity to the UPF entity in operation 820.

In operation 830, in addition to a method of transmitting a PDU session establishment success message or a separate N2 session information in operation 825, the SMF entity may transmit a message requesting modification of a PDU session by including a first ECN indicator, a second ECN indicator, an ECN tuning parameter, and a rule for performing congestion control.

Operation 825 and operation 830 are not consecutive operations, and are illustrated in FIG. 8 to describe methods for transmitting the first ECN indicator, the second ECN indicator, the ECN tuning parameter, and the rule for performing congestion control to the base station. The SMF may transfer the first ECN indicator, the second ECN indicator, the ECN tuning parameter, and the rule for performing congestion control through at least one of operation 825 or operation 830 in order to transfer the same information to the base station.

Thereafter, while uplink data or downlink data is transmitted and received among the UE, the base station, and entities of the core network, an operation of explicitly indicating a congestion control situation may be performed. Since the operation is the same as the operations in FIG. 6 and FIG. 7 described above, a detailed description thereof will be omitted.

In operation 835, the UPF entity having received rules related to congestion control from the SMF entity may apply the rules to a QoS flow. The UPF entity may detect a resource condition, based on the rules. For example, the UPF entity may detect a resource such as a buffer size, buffer usage, an overall queuing delay, and CPU/memory usage, based on the received FCR and, in particular, may detect a situation in which a condition that the overall queuing delay exceeds 1ms occurs.

In operation 840, when a condition defined in the rules related to congestion control is satisfied, the UPF entity may perform an action defined in the rules related to congestion control. A type of the action may include, for example, packet hold time configuration, ECN marking, or packet random drop. In an example, when a condition that the overall queuing delay defined in the FCR exceeds 1ms occurs, the UPF entity may perform an action of marking CE (11) indicating a congestion situation in an ECN field of a header in a packet of data transmitted and received, with a probability of 50%.

In operation 845, like the operation of the UPF entity in operation 835, the base station having received rules related to congestion control from the SMF entity may apply the rules to a QoS flow. The base station may detect a resource condition, based on the rules. However, the rules related to congestion control received by the base station may be different from the rules received by the UPF entity. In addition, the base station may limit a QoS flow to be detected, based on a QoS flow identifier (QFI) received in operation 825 or operation 830.

In operation 850, as in the operation of the UPF entity in operation 850, when a condition defined in the rules related to congestion control is satisfied, the base station may perform an action defined in the rules related to congestion control. A type of the action may include, for example, packet hold time configuration, ECN marking, or packet random drop.

The UPF entity or the base station may detect situations in which an increase in traffic, depletion of resources, or occurrence of congestion is expected, through rules related to congestion control, and may control congestion or control a transmission amount in the situation to effectively prevent congestion in a network. Accordingly, the network may prevent problems such as degradation of a quality of a service and service delay that may occur due to occurrence of congestion.

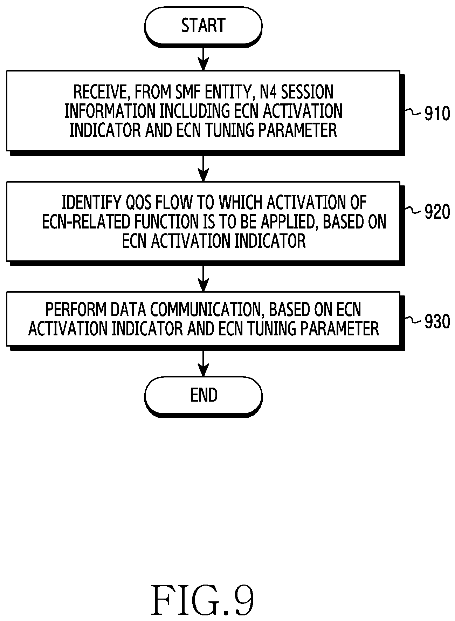

FIG. 9 illustrates an operation of a user plane function (UPF) entity according to an embodiment of the disclosure.

In operation 910, a UPF entity may receive, from an SMF entity, N4 session information including an ECN activation indicator and an ECN tuning parameter. At this time, the UPF entity receiving the ECN activation indicator and the ECN tuning parameter from the SMF entity may refer to a UPF entity selected based on ECN information supportable in a PDU session connection, which is received by the SMF entity from a UE. In an example, the ECN information supportable in the PDU session connection may include at least one of whether the UE supports ECN, information on a version of transmission control protocol (TCP), or whether transmission based on round trip time (RTT) is controlled.

According to an embodiment of the disclosure, the ECN activation indicator may include a first ECN indicator and a second ECN indicator. The first ECN indicator may indicate the UPF entity or a base station to perform ECN marking indicating whether congestion exists in an ECN field of an inner header in a packet of data. The second ECN indicator may indicate, to the UPF entity or the base station, an operation of performing ECN marking indicating whether congestion exists in an ECN field of an outer header in a packet of data, or copying an ECN-marked value in the ECN field of the outer header to an ECN field of an inner header.

The ECN tuning parameter may include information on a condition under which the UPF entity, the RAN, or a transport network device between the UPF entity and the RAN performs ECN marking.

In operation 920, the UPF entity may identify a QoS flow to which activation of an ECN-related function is to be applied, based on the ECN activation indicator received from the SMF entity.

In operation 930, the UPF entity may perform data communication, based on the ECN activation indicator and the ECN tuning parameter.

In an example, the UPF entity may receive downlink data from a server. Thereafter, the UPF entity having received a packet through an N6 interface may perform an ECN function-related algorithm of the UPF entity and, according to a result thereof, may mark an ECN field in an IP header of the packet as 11, thereby configuring a CE flag. In order to transmit the downlink data to the base station through a virtual network, the UPF entity may encapsulate the downlink data and transmit the encapsulated downlink data to the base station.

In an example, the UPF entity may receive uplink data from the base station through the virtual network. The UPF entity may remove a packet header, such as VXLAN, having been added by the base station in order to transmit the data to the UPF entity through the virtual network. In addition, when the second ECN indicator is true, the UPF entity may copy an ECN field value of an outer header of a packet of the uplink data, which has been marked as CE (11), to an IP header of a GTP-U header. Thereafter, the UPF entity may perform ECN marking as CE (11) in an inner header of the packet to be transmitted to the UE, based on the algorithm of the UPF entity or based on an ECN tuning parameter transferred from the SMF entity in operation 910. The UPF entity may transmit the uplink data, on which the inner header is ECN-marked as CE, to the server of a data network.

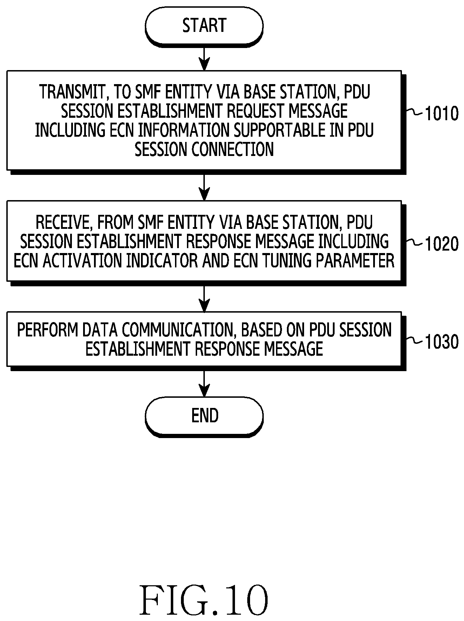

FIG. 10 illustrates an operation of a UE according to an embodiment of the disclosure.

In operation 1010, a UE may transmit, to an SMF entity via a base station, a PDU session establishment request message including ECN information supportable in a PDU session connection.

In operation 1020, the UE may receive, from the SMF entity via the base station, a PDU session establishment response message including an ECN activation indicator and an ECN tuning parameter.

According to an embodiment of the disclosure, the ECN activation indicator may include a first ECN indicator and a second ECN indicator as described with reference to operation 920 of FIG. 9. A description of the first ECN indicator and the second ECN indicator is omitted since the description has been provided above.

In operation 1030, the UE may perform data communication, based on the received PDU session establishment response message.

In an example, the UE may receive downlink data from a server through a UPF entity and the base station connected via a virtual network. The downlink data received by the UE may be a packet in which an inner header is ECN-marked as CE (11) by the base station. The UE may identify an ECN field marked in the inner header in the packet of the downlink data and may control a congestion situation according to a value of the ECN field. For example, the UE having identified the ECN field marked as CE (11) in the inner header may perform an operation of controlling the congestion situation, such as reducing a size of a congestion window.

In an example, the server of a data network may receive uplink data from the UE through the UPF entity and the base station connected via the virtual network. The uplink data received by the server may be a packet in which an inner header is ECN-marked as CE (11) by the UPF entity. The server may identify an ECN field marked in the inner header in the packet of the uplink data and may control a congestion situation according to a value of the ECN field.

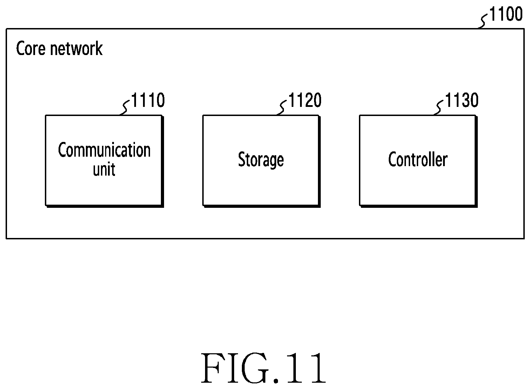

FIG. 11 illustrates a structure of a core network entity according to an embodiment of the disclosure.

The network entity according to an embodiment of the disclosure may include a processor 1120 which controls the overall operation of the network entity, a transceiver 1100 which includes a transmitter and a receiver, and memory 1110. Of course, the example given above is not limiting, and the network entity may include a smaller or larger number of components than the components illustrated in FIG. 11.

According to an embodiment of the disclosure, the transceiver 1100 may transmit/receive signals with at least one of other network entities or UEs. The signals transmitted/received with at least one of other network entities or UEs may include control information and data.

According to an embodiment of the disclosure, the processor 1120 may control the network entity to perform operations according to any one of the above-described embodiments. Of course, the processor 1120, the memory 1110, and the transceiver 1100 are not necessarily implemented as separate modules, but may be implemented as a single component unit such as a single chip. Also, the processor 1120 and the transceiver 1100 may be electrically connected to each other. In addition, the processor 1120 may be an application processor (AP), a communication processor (CP), a circuit, an application-specific circuit, or at least one processor.

According to an embodiment of the disclosure, the memory 1110 may store basic programs, application programs, and data, such as configuration information, for the operation of the network entity. In particular, the memory 1110 provides the stored data at the request of the processor 1120. The memory 1110 may include storage media such as a ROM, a RAM, a hard disk, a CD-ROM, and a DVD, or a combination of storage media. In addition, the memory 1110 may include multiple memories. Furthermore, the processor 1120 may perform the above-described embodiments of the disclosure, based on the programs for performing the embodiments, stored in the memory 1110.

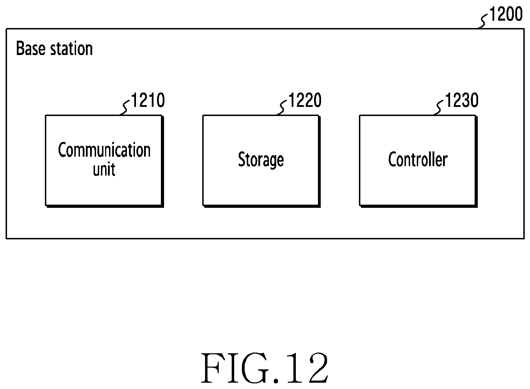

FIG. 12 illustrates a structure of a base station 1200 according to various embodiments of the disclosure.

Referring to FIG. 12, the base station 1200 includes a communication unit 1210, a storage 1220, and a controller 1230.

The communication unit 1210 performs functions for transmitting/receiving signals through a radio channel. For example, the communication unit 1210 performs functions of conversion between baseband signals and bitstrings according to the physical layer specifications of the system. For example, during data transmission, the communication unit 1210 generates complex symbols by encoding and modulating a transmission bitstream. In addition, during data reception, the communication unit 1210 demodulates and decodes a baseband signal to restore a received bitstring. In addition, the wireless communication unit 1210 up-converts a baseband signal to a radio frequency (RF) band signal, transmits the up-converted RF band signal via an antenna, and then down-converts the RF band signal received via the antenna to a baseband signal.

To this end, the wireless communication unit 1210 may include a transmission filter, a reception filter, an amplifier, a mixer, an oscillator, a digital to analog converter (DAC), an analog to digital converter (ADC), and the like. In addition, the communication unit 1210 may include multiple transmission/reception paths. Furthermore, the wireless communication unit 1210 may include at least one antenna array including multiple antenna elements. In terms of hardware, the wireless communication unit 1210 may include a digital unit and an analog unit, and the analog unit may include multiple sub-units according to operation power, frequencies, etc.

The communication unit 1210 may transmit/receive signals. To this end, the communication unit 1210 may include at least one transceiver. For example, the communication unit 1210 may transmit a synchronization signal, a reference signal, system information, a message, control information, data, or the like. Furthermore, the communication unit 1210 may perform beamforming.

The communication unit 1210 transmits and receives signals as described above. Accordingly, all or part of the communication unit 1210 may be referred to as a "transmitter", a "receiver", or a "transceiver". In addition, as used in the following description, the meaning of "transmission and reception performed through a radio channel" includes the meaning that the above-described processing is performed by the communication unit 1210.

The storage 1220 may store basic programs, application programs, and data, such as configuration information, for the operation of the base station. The storage 1220 may include a memory. The storage 1220 may include a volatile memory, a nonvolatile memory, or a combination of a volatile memory and a nonvolatile memory. In addition, the storage 1220 provides the stored data at the request of the controller 1230.

The controller 1230 controls the overall operation of the base station 1200. For example, the controller 1230 transmits/receives signals through the communication unit 1210. In addition, the controller 1230 records data in the storage 1220 and reads the data from the storage 1220. Furthermore, the controller 1230 may perform functions of protocol stacks required by communication specifications. To this end, the controller 1230 may include at least one processor.

The structure of the base station 1200 illustrated in FIG. 12 is a merely an example of the base station, and examples of the base station for performing various embodiment of the disclosure are not limited to the structure illustrated in FIG. 12. That is, according to various embodiments of the disclosure, some components may be added, deleted, or modified.

In FIG. 12, the base station 1200 has been described as a single entity, but the disclosure is not limited thereto. In addition to the integrated deployment, the base station 1200 according to various embodiments of the disclosure may be implemented to construct an access network having a distributed deployment. According to an embodiment, the base station may be divided into a central unit (CU) and a digital unit (DU), the CU may be implemented to perform upper layer functions (e.g., packet data convergence protocol (PDCP) and RRC), and the DU may be implemented to perform lower layer functions (e.g., medium access control (MAC) and physical (PHY)). The DU of the base station may form beam coverage on a radio channel.

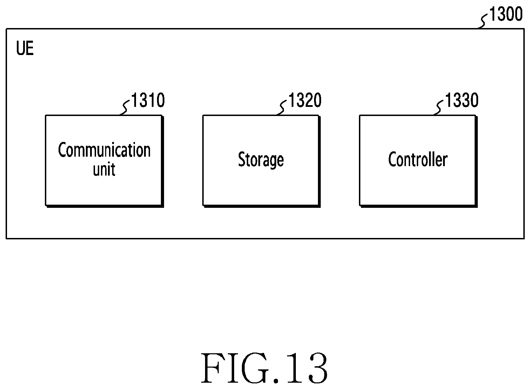

FIG. 13 illustrates a structure of a UE 1300 according to various embodiments of the disclosure.

The structure illustrated in FIG. 13 may be understood as a structure of the UE 1300. As used herein, such terms as "... unit" and "... er" may refer to a unit configured to process at least one function or operation, and may be implemented as hardware, software, or a combination of hardware and software.

Referring to FIG. 13, the UE 1300 may include a communication unit 1310, a storage 1320, and a controller 1330.

The communication unit 1310 performs functions for transmitting/receiving signals through a radio channel. For example, the communication unit 1310 performs functions of conversion between baseband signals and bitstrings according to the physical layer specifications of the system. For example, during data transmission, the communication unit 1310 generates complex symbols by encoding and modulating a transmission bitstream. In addition, during data reception, the communication unit 1310 demodulates and decodes a baseband signal to restore a received bitstring. In addition, the communication unit 1310 up-converts a baseband signal to an RF band signal, transmits the same through an antenna, and down-converts an RF band signal received through the antenna to a baseband signal. For example, the communication unit 1310 may include a transmission filter, a reception filter, an amplifier, a mixer, an oscillator, a DAC, and an ADC.

In addition, the communication unit 1310 may include multiple transmission/reception paths. Furthermore, the communication unit 1310 may include an antenna unit. The communication unit 1310 may include at least one antenna array configured by multiple antenna elements. In terms of hardware, the communication unit 1310 may include a digital circuit and an analog circuit (e.g., a radio frequency integrated circuit (RFIC)). Here, the digital circuit and the analog circuit may be configured as a single package. In addition, the communication unit 1310 may include multiple RF chains. The communication unit 1310 may perform beamforming. In order to assign directivity based on configurations of the controller 1330 to a signal to be transmitted/received, the communication unit 1310 may apply a beamforming weight to the signal. According to an embodiment, the communication unit 1310 may include a radio frequency (RF) block (or RF unit). The RF block may include first RF circuitry related to antennas and second RF circuitry related to baseband processing. The first RF circuitry may be referred to as an RF-antenna (RF-A). The second RF circuitry may be referred to as an RF-baseband (RF-B).

In addition, the communication unit 1310 may transmit/receive signals. To this end, the communication unit 1310 may include at least one transceiver. The communication unit 1310 may receive a downlink signal. The downlink signal may include a synchronization signal (SS), a reference signal (RS) (e.g., demodulation (DM)-RS or phase tracking reference signal (PTRS)), system information (e.g., MIB, SIB, remaining system information (RMSI), or other system information (OSI)), a configuration message, control information, downlink data, or the like. The communication unit 1310 may transmit an uplink signal. The uplink signal may include a random access-related signal (e.g., random access preamble (RAP) (or message 1 (Msg1), message 3 (Msg3)), a reference signal (e.g., sounding reference signal (SRS), DMRS, or PTRS), a power headroom report (PHR), or the like.

In addition, the communication unit 1310 may include different communication modules in order to process signals in different frequency bands. Furthermore, the communication unit 1310 may include multiple communication modules in order to support multiple different radio access technologies. For example, the different radio access technologies may include Bluetooth low energy (BLE), wireless fidelity (Wi-Fi), Wi-Fi gigabyte (WiGig), cellular networks (e.g., long-term evolution (LTE)), new radio (NR), and the like. Also, the different frequency bands may include super high frequency (SHF) bands (e.g., 2.5GHz or 5GHz bands), millimeter wave (mmWave) bands (e.g., 38GHz or 60GHz bands), and the like. In addition, the communication unit 1310 may use a radio-access technology of the same scheme on different frequency bands (e.g., an unlicensed band for licensed assisted access (LAA) and a citizen broadband radio service (CBRS) (e.g., 3.5GHz)).

The communication unit 1310 transmits and receives signals as described above. Accordingly, all or part of the communication unit 1310 may be referred to as a "transmitter", a "receiver", or a "transceiver". In addition, as used in the following description, the meaning of "transmission and reception performed through a radio channel" includes the meaning that the above-described processing is performed by the communication unit 1310.

The storage 1320 may store basic programs, application programs, and data, such as configuration information, for the operation of the UE 1300. The storage 1320 may include a volatile memory, a nonvolatile memory, or a combination of a volatile memory and a nonvolatile memory. In addition, the storage 1320 provides the stored data at the request of the controller 1330.

The controller 1330 controls overall operations of the UE 1300. For example, the controller 1330 transmits/receives signals through the communication unit 1310. In addition, the controller 1330 records data in the storage 1320 and reads the data from the storage 1320. In addition, the controller 1330 may perform functions of protocol stacks required by communication specifications. To this end, the controller 1330 may include at least one processor. The controller 1330 may include at least one processor or micro-processor, or may be a part of a processor. In addition, a part of the communication unit 1310 and the controller 1330 may be referred to as a communication processor (CP). The controller 1330 may include various modules for performing communication. According to various embodiments, the controller 1330 may control the UE to perform the operations according to various embodiments.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. In addition, the above respective embodiments may be employed in combination, as necessary.

As described above, a method performed by a user plane function (UPF) entity in a wireless communication system according to various embodiments disclosed herein may include receiving, from a session management function (SMF) entity, N4 session information including an explicit congestion notification (ECN) activation indicator and an ECN tuning parameter, identifying a QoS flow to which activation of an ECN-related function is to be applied, based on the ECN activation indicator, and performing data communication, based on the ECN activation indicator and the ECN tuning parameter.

According to various embodiments disclosed herein, the ECN activation indicator may include a first ECN indicator and a second ECN indicator, the first ECN indicator may indicate the UPF entity or a base station to perform ECN marking indicating whether congestion exists in an ECN field of an inner header of data, and the second ECN indicator may indicate, to the UPF entity or the base station, an operation of performing ECN marking indicating whether congestion exists in an ECN field of an outer header of data, or copying an ECN-marked value in the ECN field of the outer header to an ECN field of an inner header of the data.

According to various embodiments disclosed herein, the method may further include receiving downlink data from a server, identifying whether an ECN marking condition is satisfied for the downlink data, in case that the ECN marking condition is satisfied, performing ECN marking in an ECN field of an outer header in the downlink data, and transmitting the ECN-marked downlink data to a base station via a virtual network.

According to various embodiments disclosed herein, the method may include receiving uplink data in which an ECN field of an outer header is ECN-marked, from a base station via a virtual network, copying an ECN-marked value in the ECN field of the outer header in the uplink data to an ECN field of an inner header in the uplink data, in case that the received uplink data satisfies an ECN marking condition indicated by the ECN tuning parameter, performing ECN marking in an ECN field of an inner header in the uplink data, and transmitting, to a server, the uplink data in which the ECN field of the inner header is ECN-marked.

According to various embodiments disclosed herein, the UPF entity may indicate a UPF entity selected based on ECN information supportable in a PDU session connection, the ECN information being received by the SMF entity from a user equipment (UE), and the ECN information supportable in the PDU session connection may include at least one of whether the UE supports ECN, information on a version of transmission control protocol (TCP), or whether transmission based on round trip time (RTT) is controlled.

As described above, a method performed by a user equipment (UE) in a wireless communication system according to various embodiments disclosed herein may include transmitting, to a session management function (SMF) entity via a base station, a PDU session establishment request message including ECN information supportable in a PDU session connection, receiving, from the SMF entity via the base station, a PDU session establishment response message including an explicit congestion notification (ECN) activation indicator and an ECN tuning parameter, and performing data communication, based on the PDU session establishment response message, wherein the PDU session establishment response message includes identification information for a QoS flow to which activation of an ECN-related function is to be applied by the base station based on the ECN activation indicator.

According to various embodiments disclosed herein, the ECN activation indicator may include a first ECN indicator and a second ECN indicator, the first ECN indicator may indicate a user plane function (UPF) entity or the base station to perform ECN marking indicating whether congestion exists in an ECN field of an inner header of data, and the second ECN indicator may indicate, to the UPF entity or the base station, an operation of performing ECN marking indicating whether congestion exists in an ECN field of an outer header of data, or copying an ECN-marked value in the ECN field of the outer header to an ECN field of an inner header of the data.

According to various embodiments disclosed herein, the method may include receiving downlink data from the base station, identifying an ECN field of an inner header in the received downlink data, and controlling a congestion situation according to the identified ECN field, wherein ECN marking indicating whether congestion exists has been performed by the base station in the ECN field of the inner header in the downlink data.

According to various embodiments disclosed herein, the received downlink data may include an outer header including an ECN field in which ECN marking indicating whether congestion exists has been performed by a UPF entity.

According to various embodiments disclosed herein, the controlling of the congestion situation may include, in case that the ECN marking is indicated by a predetermined value, identifying a congestion situation, and performing an operation of reducing a size of a congestion window according to the identified congestion situation.

As described above, a user plane function (UPF) entity in a wireless communication system according to various embodiments disclosed herein may include at least one transceiver and a controller coupled to the at least one transceiver. The controller may be configured to receive, from a session management function (SMF) entity, N4 session information including an explicit congestion notification (ECN) activation indicator and an ECN tuning parameter, identify a QoS flow to which activation of an ECN-related function is to be applied, based on the ECN activation indicator, and perform data communication, based on the ECN activation indicator and the ECN tuning parameter.

According to various embodiments disclosed herein, the ECN activation indicator may include a first ECN indicator and a second ECN indicator, the first ECN indicator may indicate the UPF entity or a base station to perform ECN marking indicating whether congestion exists in an ECN field of an inner header of data, and the second ECN indicator may indicate, to the UPF entity or the base station, an operation of performing ECN marking indicating whether congestion exists in an ECN field of an outer header of data, or copying an ECN-marked value in the ECN field of the outer header to an ECN field of an inner header of the data.

According to various embodiments disclosed herein, the controller may be further configured to receive downlink data from a server, identify whether an ECN marking condition is satisfied for the downlink data, in case that the ECN marking condition is satisfied, perform ECN marking in an ECN field of an outer header in the downlink data, and transmit the ECN-marked downlink data to a base station via a virtual network.

According to various embodiments disclosed herein, the controller may be further configured to receive uplink data in which an ECN field of an outer header is ECN-marked, from a base station via a virtual network, copy an ECN-marked value in the ECN field of the outer header in the uplink data to an ECN field of an inner header in the uplink data, in case that the received uplink data satisfies an ECN marking condition indicated by the ECN tuning parameter, perform ECN marking in an ECN field of an inner header in the uplink data, and transmit, to a server, the uplink data in which the ECN field of the inner header is ECN-marked.

According to various embodiments disclosed herein, the UPF entity may indicate a UPF entity selected based on ECN information supportable in a PDU session connection, the ECN information being received by the SMF entity from a user equipment (UE), and the ECN information supportable in the PDU session connection may include at least one of whether the UE supports ECN, information on a version of transmission control protocol (TCP), or whether transmission based on round trip time (RTT) is controlled.

As described above, a user equipment (UE) in a wireless communication system according to various embodiments disclosed herein may include at least one transceiver and a controller coupled to the at least one transceiver. The controller may be configured to transmit, to a session management function (SMF) entity via a base station, a PDU session establishment request message including ECN information supportable in a PDU session connection, receive, from the SMF entity via the base station, a PDU session establishment response message including an explicit congestion notification (ECN) activation indicator and an ECN tuning parameter, and perform data communication, based on the PDU session establishment response message, wherein the PDU session establishment response message includes identification information for a QoS flow to which activation of an ECN-related function is to be applied by the base station based on the ECN activation indicator.

According to various embodiments disclosed herein, the ECN activation indicator may include a first ECN indicator and a second ECN indicator, the first ECN indicator may indicate a user plane function (UPF) entity or the base station to perform ECN marking indicating whether congestion exists in an ECN field of an inner header of data, and the second ECN indicator may indicate, to the UPF entity or the base station, an operation of performing ECN marking indicating whether congestion exists in an ECN field of an outer header of data, or copying an ECN-marked value in the ECN field of the outer header to an ECN field of an inner header of the data.

According to various embodiments disclosed herein, the controller may be further configured to receive downlink data from the base station, identify an ECN field of an inner header in the received downlink data, and control a congestion situation according to the identified ECN field, wherein ECN marking indicating whether congestion exists has been performed by the base station in the ECN field of the inner header in the downlink data.

According to various embodiments disclosed herein, the received downlink data may include an outer header including an ECN field in which ECN marking indicating whether congestion exists has been performed by a UPF entity.

According to various embodiments disclosed herein, the controller may be further configured to, in case that the ECN marking is indicated by a predetermined value, identify a congestion situation, and perform an operation of reducing a size of a congestion window according to the identified congestion situation.

## Claims

1. A method performed by a user plane function (UPF) entity in a wireless communication system, the method comprising:
receiving, from a session management function (SMF) entity, N4 session information including an explicit congestion notification (ECN) activation indicator and an ECN tuning parameter;
based on the ECN activation indicator, identifying a quality of service (QoS) flow to which activation of an ECN-related function is to be applied; and
based on the ECN activation indicator and the ECN tuning parameter, performing data communication.

2. The method of claim 1, wherein the ECN activation indicator comprises a first ECN indicator and a second ECN indicator,
wherein the first ECN indicator indicates, to the UPF entity or a base station, to perform ECN marking, which indicates whether congestion exists, in an ECN field of an inner header of data, and
wherein the second ECN indicator indicates, to the UPF entity or the base station, an operation of performing ECN marking, which indicates whether congestion exists, in an ECN field of an outer header of data, or copying an ECN-marked value in the ECN field of the outer header to an ECN field of an inner header of the data.

3. The method of claim 1, further comprising:
receiving downlink data from a server;
identifying whether an ECN marking condition is satisfied for the downlink data;
in case that the ECN marking condition is satisfied, performing ECN marking in an ECN field of an outer header in the downlink data; and
transmitting the ECN-marked downlink data to a base station via a virtual network.

4. The method of claim 1, comprising:
receiving uplink data, in which an ECN field of an outer header is ECN-marked, from a base station via a virtual network;
copying an ECN-marked value in the ECN field of the outer header in the uplink data to an ECN field of an inner header in the uplink data;
in case that the received uplink data satisfies an ECN marking condition indicated by the ECN tuning parameter, performing ECN marking in the ECN field of the inner header in the uplink data; and
transmitting, to a server, the uplink data in which the ECN field of the inner header is ECN-marked.

5. The method of claim 1, wherein the UPF entity indicates a UPF entity selected based on ECN information supportable in a protocol data unit (PDU) session connection, the ECN information being received by the SMF entity from a user equipment (UE), and
wherein the ECN information supportable in the PDU session connection comprises at least one of whether the UE supports ECN, information on a version of transmission control protocol (TCP), or whether transmission is controlled based on round trip time (RTT).

6. A method performed by a user equipment (UE) in a wireless communication system, the method comprising:
transmitting, to a session management function (SMF) entity via a base station, a protocol data unit (PDU) session establishment request message including explicit congestion notification (ECN) information supportable in a PDU session connection;
receiving, from the SMF entity via the base station, a PDU session establishment response message including an ECN activation indicator and an ECN tuning parameter; and
performing data communication, based on the PDU session establishment response message,
wherein the PDU session establishment response message includes identification information for a quality of service (QoS) flow to which activation of an ECN-related function is to be applied by the base station based on the ECN activation indicator.

7. The method of claim 6, wherein the ECN activation indicator comprises a first ECN indicator and a second ECN indicator,
wherein the first ECN indicator indicates, to a user plane function (UPF) entity or the base station, to perform ECN marking, which indicates whether congestion exists, in an ECN field of an inner header of data, and
wherein the second ECN indicator indicates, to the UPF entity or the base station, an operation of performing ECN marking, which indicates whether congestion exists, in an ECN field of an outer header of data, or copying an ECN-marked value in the ECN field of the outer header to an ECN field of an inner header of the data.

8. The method of claim 6, further comprising:
receiving downlink data from the base station;
identifying an ECN field of an inner header in the received downlink data; and
controlling a congestion situation according to the identified ECN field,
wherein ECN marking, which indicates whether congestion exists, has been performed by the base station in the ECN field of the inner header in the downlink data.

9. The method of claim 8, wherein, in the received downlink data, ECN marking, which indicates whether congestion exists, has been performed by the UPF entity in an ECN field of an outer header.

10. The method of claim 8, wherein the controlling of the congestion situation comprises:
in case that the ECN marking is indicated as a predetermined value, identifying a congestion situation; and
performing an operation of reducing a size of a congestion window according to the identified congestion situation.

11. A user plane function (UPF) entity in a wireless communication system, the UPF entity comprising:
at least one transceiver; and
a controller coupled to the at least one transceiver,
wherein the controller is configured to:
receive, from a session management function (SMF) entity, N4 session information including an explicit congestion notification (ECN) activation indicator and an ECN tuning parameter,
based on the ECN activation indicator, identify a quality of service (QoS) flow to which activation of an ECN-related function is to be applied, and
based on the ECN activation indicator and the ECN tuning parameter, perform data communication.

12. The UPF entity of claim 11, wherein the ECN activation indicator comprises a first ECN indicator and a second ECN indicator,
wherein the first ECN indicator indicates, to the UPF entity or a base station, to perform ECN marking, which indicates whether congestion exists, in an ECN field of an inner header of data, and
wherein the second ECN indicator indicates, to the UPF entity or the base station, an operation of performing ECN marking, which indicates whether congestion exists, in an ECN field of an outer header of data, or copying an ECN-marked value in the ECN field of the outer header to an ECN field of an inner header of the data.

13. The UPF entity of claim 1, wherein the controller is further configured to:
receive downlink data from a server,
identify whether an ECN marking condition is satisfied for the downlink data,
in case that the ECN marking condition is satisfied for the downlink data, perform ECN marking in an ECN field of an outer header in the downlink data, and
transmit the ECN-marked downlink data to a base station via a virtual network.

14. A user equipment (UE) in a wireless communication system, the UE comprising:
at least one transceiver; and
a controller coupled to the at least one transceiver,
wherein the controller is configured to:
transmit, to a session management function (SMF) entity via a base station, a protocol data unit (PDU) session establishment request message including explicit congestion notification (ECN) information supportable in a PDU session connection;
receive, from the SMF entity via the base station, a PDU session establishment response message including an ECN activation indicator and an ECN tuning parameter; and
perform data communication, based on the PDU session establishment response message, and
wherein the PDU session establishment response message includes identification information for a quality of service (QoS) flow to which activation of an ECN-related function is to be applied by the base station based on the ECN activation indicator.

15. The UE of claim 14, wherein the ECN activation indicator comprises a first ECN indicator and a second ECN indicator,
wherein the first ECN indicator indicates, to a user plane function (UPF) entity or the base station, to perform ECN marking, which indicates whether congestion exists, in an ECN field of an inner header of data, and
wherein the second ECN indicator indicates, to the UPF entity or the base station, an operation of performing ECN marking, which indicates whether congestion exists, in an ECN field of an outer header of data, or copying an ECN-marked value in the ECN field of the outer header to an ECN field of an inner header of the data.
